# EUROPEAN PATENT APPLICATION

(11) **EP 2 463 791 A1**
(43) Date of publication of application: **13.06.2012**
(21) Application number: 10191499.2
(22) Date of filing: 17.11.2010
(51) Int. Cl.: G06F 17/50, A41C 3/10, A41C 3/14

(54) **Process for structuring clothing**

(71) Applicant: Calissoni, Laura, 20040 Aicurzio (MI) (IT)
(72) Inventor: Calissoni, Laura, 20040 Aicurzio (MI) (IT)
(74) Representative: Lunati & Mazzoni S.r.L.

(57) **Abstract**

It is provided a process for structuring articles of clothing (10) comprising a modelling step (2) in which a three-dimensional graphic representation (20) is defined of the body portion (20) covered with the article of clothing (10); an analysis step (3) in which through a calculation model, the state of stress and deformation of the three-dimensional graphic representation (20) is evaluated in at least one use condition; an emphasising step (4) in which the critical regions (22) of the three-dimensional graphic representation (20) are looked for; and an insertion step (5) in which at least one bandage (11) is designed, which bandage is placed substantially at the critical regions (22).

## Description

The present invention relates to a process for structuring clothing of the type pointed out in the preamble of the first claim.

In particular, the process is adapted to manufacture clothing capable of propping up at least part of the user's body during performance of a physical or work activity. In greater detail, the process is adapted to design clothing capable of reducing the stresses acting on the body without giving rise to deformations that over time can lower the body performance.

It is known that during an activity and above all a sport activity, some parts of the human body such as the upper and lower limbs, suffer for heavy stresses intrinsic to the performed activity. These stresses are transmitted to the biological tissues and can lead, over time, to a strong reduction in the biofunctionality with heavy repercussions on both the aesthetic and physical performance.

One of the examples characteristic of this problem can be found in the woman body and in particular the breast which, being almost devoid of muscles, is unable to offer an appropriate resistance to the stresses to which it is submitted during a physical activity. Therefore, the breast suffers for microtraumas that cause pain and in the long run can give rise to an irreversible mammary ptosis. In is known that the breast is placed before the pectoral muscle in the region between the second and sixth rib, and has a main gland structure coated with a subcutaneous fat layer, in turn covered with the cutis or skin. It has ligaments commonly referred to as "Cooper's ligaments" or merely "suspensory ligaments", which consist of a fibrous tissue passing through the subcutaneous fat and anchoring the gland tissue to the skin.

Exactly these "Cooper's ligaments" can become stretched during the sudden and sharp movements of a sport activity causing pain and also a substantially irreversible breast lowering.

Then, more detailed and concrete evaluations - necessary for examining the specific problems in depth - indicate that in quick sport movements the pain and possible stretching of the "Cooper's ligaments" also depend on the breast size and weight.

The sizes and weight of each breast can widely vary from a person to another and in addition they vary depending on the specific situations of each person. For instance, they depend on age, possible pregnancy or lactation situations, reaching of the menopause period, etc.

Many manufacturers have therefore begun designing brassières capable of supporting the breast under any condition. In particular, the designing has been mainly carried out using empirical methods.

In fact, the adopted process contemplates a first theoretical study relating to the shape of the article of clothing, in which study an attempt is made to conceive a brassière based on the personal experience of the designers and on data collected during previous works or suitable studies.

An example of a study is that entitled "Mechanics of the normal woman's breast" by Amit Gefen (Department of Biomedical Engineering, Faculty of Engineering, Tel Aviv University, at Tel Aviv, Israel) and by Benny Dilmoney (MIM Minimal Invasive Mastopexy, at Kiryat Shmona, Israel). This study states which are the stresses that the pectoral muscle, the ribs and above all the Cooper's ligaments can withstand during the sport activities.

In particular, said study has analysed a small breast and a large breast respectively having 500 g and 1000 g masses, highlighting how the forces acting on the breast greatly depend on the situation of use and sizes of the breast itself. In the following table the values for each case of the forces expressed in Newton (N) acting on the Cooper's ligaments are disclosed and indicated as FLC.

| PHYSICAL ACTIVITY | FLC for small breast | FLC for large breast |
|---|---|---|
| | | |
| Simple walking | 5.3 (N) | 15 (N) |
| | | |
| Running | 17.7 (N) | 50 (N) |
| | | |
| Free vertical jump | 8.8 (N) | 25 (N) |
| | | |
| Springboard jump | 20.6 (N) | 58.3 (N) |

Once an article of clothing or garment is designed, garments are manufactured that are tested by persons having a physical constitution almost coincident with that of the 50th percentile, i.e. by persons corresponding to the mean build of a person. Therefore these persons wear the article of clothing during a given test period, usually of about two months, during which they behave normally, i.e. carry out the usually performed activities so as to submit the article to the stresses to which it will be subjected when put up for sale.

At the end of the period, the garments are analysed, i.e. their integrity and deformation are verified. If the result is not satisfactory a new clothing is designed based on the collected data, whereas if the result is good, the product can be put on the market.

The known art mentioned above has some important drawbacks.

In fact, the structuring process used is slow and arduous.

This is because, for verifying the good quality of a garment and the modifications made to the same it is necessary to carry out a test period that can last long.

In addition, the obtained results after a first attempt are often unsatisfactory and it is therefore necessary to repeat the process again, which is time-consuming and expensive.

Another problem of the structuring technique is that, as it is almost exclusively based on the experience, it is not able to provide an ideal solution but only to give an approximate solution of the problem.

A further problem arising from this process is represented by the high costs. Under this situation, the technical task underlying the present invention is to conceive a structuring process for clothing capable of substantially obviating the mentioned drawbacks.

Within the scope of this technical task it is an important aim of the invention to conceive a process enabling manufacture of an article of clothing in a quick and cheap manner.

Another important aim of the invention is to obtain a process making the test periods almost useless.

A still further aim of the invention is to make available a process that is able to analyse the problem also from a merely theoretical point of view, i.e. that is not exclusively based on the designers' experience.

The technical task mentioned and the aims specified are achieved by a process for structuring clothing as claimed in the appended claim 1.

Preferred embodiments are highlighted in the sub-claims.

The features and advantages of the invention are hereinafter clarified by the detailed description of a preferred application of the invention, with reference to the accompanying drawings, in which:
**Fig. 1** shows a diagram of the process according to the invention;
**Fig. 2** shows a body portion processed according to the structuring process;
**Fig. 3** highlights a step of the process following the step shown in Fig. 2;
**Fig. 4** is a representation of the bust provided with the article of clothing; and
**Fig. 5** reproduces an article of clothing designed according to the manufacturing process.

With reference to the drawings, the structuring process for clothing according to the invention is generally identified by reference numeral **1**.

It teaches how to design and fashion articles of clothing **10** that are able to prop up at least one body portion of a user during performance of a physical or work activity. In greater detail, the body portion and article of clothing 10 are preferably a woman's bust or breast and a brassière.

In the following of the text, in order to make the description of process 1 clearer, reference will be exclusively made to an example of process 1 relating to fashioning of a brassière.

Process 1 can be divided into a sequence of steps in which a virtual processing of the article of clothing 10 is carried out as well as of the related body portion. Process 1 first contemplates a modelling step **2** during which a three-dimensional graphic representation **20** of the body portion is defined. In this step 2 a virtual modelling of the body portion almost corresponding to the build of a person is carried out.

Preferably a plurality of three-dimensional models are created, each of them corresponding to the body specifications belonging to a given size or a given percentile of the population. This advantageous possibility allows a specific design for each size to be carried out and is able to meet the particular requirements of a person.

When the modelling step **2** has been completed, the process goes on with the following analysis step **3** in which through a calculation model, the state of stress and deformation of the three-dimensional graphic representation 20 is evaluated in at least one use condition. By the expression "state of stress and deformation" it is intended the study of the development of the stresses present in said graphic representation 20 when submitted to forces, and/or the deformations that these forces can generate over time or, alternatively, the development of both the stresses and the deformations.

In particular, the analysis step 3 contemplates the discretization **3a** of the graphic representation 20, so as to obtain a discretized model **21**.

This discretization 3a contemplates the separation of said graphic representation 20 into a plurality of elements **21a** of definite shape and reduced sizes. Finally, these elements 21 a are linked to each other, so as to simulate the mechanical properties of the tissues forming the body portion, and submitted to stresses so as to evaluate the state of stress and deformation of the whole graphic representation 20.

The calculation model adopted for carrying out this analysis can be a FEM technique, i.e. Finite Element Method, or a BEM technique, i.e. Boundary Element Method.

The FEM, known by itself, divides the three-dimensional graphic representation 20 into a plurality of elements 21a, preferably three-dimensional, suitably connected to each other and representing the whole of the body portion. In particular, associated with each element 21 are technical values such as stiffness or elasticity, belonging to the tissue it represents.

The BEM, also known by itself, in contrast to the FEM, is based on the hypothesis that the state of stress and deformation of a body can be known based on what happens on its boundary, i.e. its outer surface. Therefore it is obtained a discretized model 21 of the only outer surface of the graphic representation 20, which is therefore separated into a plurality of surface elements 21a joined by suitable connections enabling the mechanical features of the body portion to be simulated.

When discretization 3a has been completed, the analysis step is terminated through the evaluation **3b** of the state of stress and deformation in one or more use conditions of the article of clothing 10.

For evaluation 3b of the state of stress and deformation a series of simulations relative to the possible situations in which the user can wear the article of clothing 10 being designed are carried out, in each of them imposing the forces referred either to static postures, such as standing up or lying on one's back, or to dynamic activities such as walking, running or jumping.

When the forces have been set, the evaluation 3b terminates with the calculation of the state of stress and deformation of the body portion in each of the use conditions taken into account through said calculation models. Consequently for each use condition, an evaluation on the development of the stresses on the graphic representation 20 is obtained, as well of possible deformations that can take place therein over time.

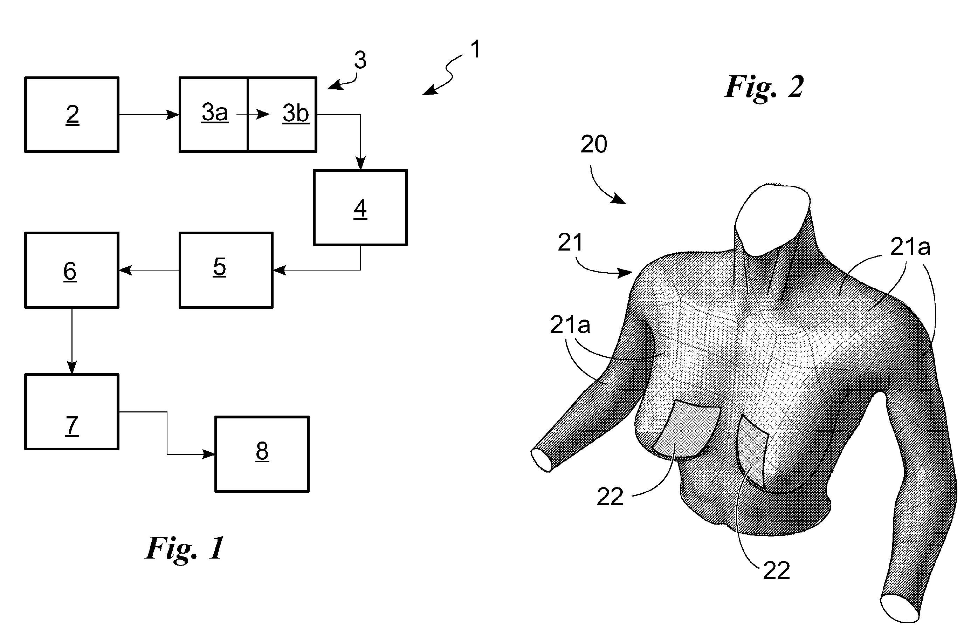

When the analysis step 3 has been completed, the emphasising step **4** begins in which the critical regions **22** (Fig. 2) of the three-dimensional graphic representation 20 are looked for. Based on the state of stress and deformation calculated in the analysis step 3 for each use condition under examination the critical regions 22 are looked for, i.e. the parts submitted to higher stresses or greater deformations. Therefore the parts of the body portion that in a specific use condition are mostly submitted to deterioration and physical-aesthetic decay are emphasised.

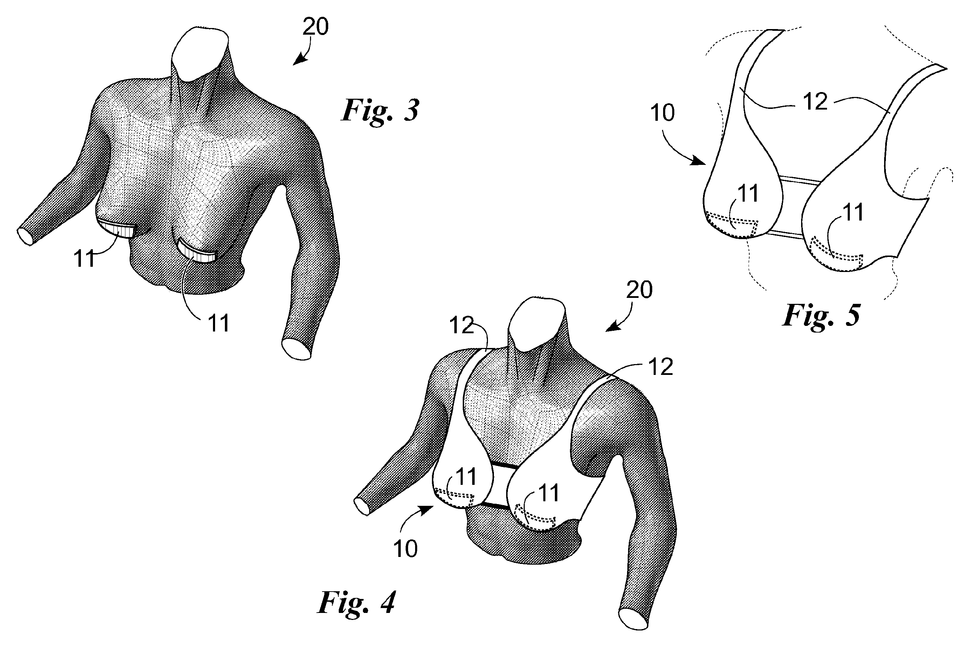

When this step 4 has been completed, the insertion step **5** shown in Fig. 3 starts, in which the article of clothing 10 begins being defined through the design of at least one bandage **11**.

Bandages 11 are substantially reinforcing elements suitably shaped that, placed at the critical regions **22**, enable the state of stress and deformation of the graphic representation 20 determined in the previous analysis step 3 to be advantageously modified.

In particular, at each critical region 22 at least one bandage 11 with particular physico-mechanical features selected by the designer is placed. Therefore the materials or fabrics and sizes of each bandage 11 are determined. Subsequently a discretization of the bandages 11 is carried out, which bandages are separated into a plurality of elements 21 a according to the calculation model previously used.

When positioning of bandages 11 has been completed, an evaluation step **6** following said insertion step 5 is carried out, in which through the previously adopted calculation model, the new state of stress and deformation of the graphic representation 20 provided with bandages 11 is evaluated. Therefore it is evaluated how stresses and deformations are modified by bandages 11 and, in particular, it is evaluated whether the values obtained from this analysis are acceptable or it is necessary to design the bandages 11 again.

Alternatively, during the insertion step 5, the bandages 11 are first designed and disposed at the critical regions 22 without setting the physico-mechanical features thereof. Subsequently, in the evaluation step 6, a new study of the state of stress and deformation is carried out where, by imposing a maximum value for stress and deformation, the physico-mechanical features that bandages 11 must have is determined.

Then in this second alternative, based on the reached results, the materials with characteristics almost coincident with said just found features are selected. This selection can be advantageously carried out through an automatic comparison of the calculated data with those of a database in which the information concerning the materials used for article 10 had been previously collected. Shown in Fig. 3 are bandages 11 relating to the design of a brassière. In this particular case, the bandages 11 are placed at the lower breast part.

Once the state of stress and deformation obtained in the evaluation step 6 is deemed as acceptable, the manufacturing process 11 carries out the following definition step 7 shown in Fig. 4 in which the shape or pattern 12 of the article of clothing 10 is processed. In particular, in this step 7, based on bandages 11, the shape 12 is outlined; it defines the shape and boundaries that substantially determine the aesthetic appearance of the article of clothing 10.

When accomplishment of the shape 12 has been completed, the definition step 7 is finished through engagement of said shape 12. In particular, the shape 12 is suitably engaged with both the three-dimensional graphic representation 20 and bandages 11. Therefore constraints between said components are introduced which are adapted to make determined parts of the above mentioned three components integral or constrained.

In detail, the constraints placed between the shape 12 and the graphic representation 20 are adapted to simulate the interaction of the article of clothing 10 on the body portion. For instance, the contact region between a brassière and the user's shoulders are almost integral and therefore the constraint adapted to simulate this relation makes the shape 12 integral with the graphic representation 20.

Alternatively, the definition step 7 can be carried out simultaneously with the insertion step 5.

When the definition step 7 has been brought to an end, process 1 is completed with a determination step **8**.

In this step 8 a last analysis of the state of stress and deformation of the assembly consisting of the graphic representation 20, bandages 11 and shape 12 is carried out in order to verify the physical features of the article of clothing and, more precisely, to determine the physico-mechanical features of the shape 12.

Finally, based on the aforesaid features, the type of material of the shape which is the most suitable to the state of stress and deformation to which it is subjected is selected. This selection, as that previously described for bandages 11, can take place automatically through a comparison between the obtained data and those contained in a suitable database.

In particular, in addition to the type of material, the local orientation of the fibres and the local thickness of the material is determined, i.e. for each part of the shape it is evaluated which is the optimal arrangement of the fibres and the thickness in order to obtain a strong and good-quality article of clothing 10. When the determination step 8 has been completed, the obtained article of clothing 10 will consist of the bandages 11 and the shape 12.

Alternatively, the determination step 8 can be carried out simultaneously with the evaluation step 6.

Each of the above described process steps can be carried out through specific software, known and present on the market, for the three-dimensional design and processing of the calculation models.

The invention achieves important advantages.

A first important advantage of the above described structuring process is that of manufacturing an article of clothing in a quick and cheap manner.

In fact, it is no longer necessary to have the article of clothing tested by a person wearing the same for long periods of time and therefore it is no longer necessary to manufacture articles of clothing 10 for the purpose of having them tested.

In addition, due to the above described structuring process it is possible to verify in an almost instantaneous manner whether the article of clothing 10 meets the structuring requirements, and the process also enables the designer's experience to be combined with the analysis and comparison capacities typical of a computer.

A further advantage resides in the possibility of carrying out a specific design for each size, so as to meet the particular requirements of a person.

The invention is susceptible of variations falling within the scope of the inventive idea. All of the details can be replaced by equivalent elements and the materials, shapes and sizes can be of any nature and magnitude.

## Claims

1. A process for structuring articles of clothing (10) adapted to at least partly cover a body portion (20), said process (1) being adapted to design an article of clothing (10), **characterised in that** it comprises a modelling step (2) in which a three-dimensional graphic representation (20) of said body portion (20) is defined, an analysis step (3) in which through a calculation model the state of tension and deformation of said three-dimensional graphic representation (20) is defined in at least one use condition, an emphasising step (4) in which the critical regions (22) of said three-dimensional graphic representation (20) are looked for, and an insertion step (5) in which at least one bandage (11) is designed and said bandage (11) is placed substantially in said three-dimensional graphic representation (20) at said critical regions (22).

2. A process (1) as claimed in claim 1, comprising a definition step (7) in which the shape (12) of said article of clothing (10) is outlined as a function of said at least one bandage (11).

3. A process (1) as claimed in claim 2, wherein in said definition step (7) said shape (12) is constrained to said three-dimensional graphic representation (20) and said at least one bandage (11).

4. A process (1) as claimed in one or more of the preceding claims, comprising a determination step (8) in which the physical features of said shape (12) are determined.

5. A process (1) as claimed in claim 4, wherein in said determination step (8) the local orientation of the fibres of said shape (12) are determined.

6. A process (1) as claimed in one or more of claims 4-5, wherein in said determination step (8) the local thickness of said shape (12) is determined.

7. A process (1) as claimed in one or more of the preceding claims, wherein said insertion step (5) is simultaneous with said definition step (7) and said evaluation step (6) is simultaneous with said determination step (8).

8. A process (1) as claimed in one or more of the preceding claims, wherein said calculation model is a finite-element model.

9. A process (1) as claimed in one or more of the preceding claims, wherein said calculation model is a boundary-element model.

10. A process (1) as claimed in one or more of the preceding claims, wherein said article of clothing (10) is a brassibre.
